# EUROPÄISCHE PATENTSCHRIFT

(11) **EP 0 656 613 B1**
(45) Veröffentlichungstag und Bekanntmachung des Hinweises auf die Patenterteilung: **01.09.1999**
(21) Anmeldenummer: 94118469.9
(22) Anmeldetag: 24.11.1994
(51) Int. Cl.: G09B 9/00, G06F 3/00

(54) **Bewegungsgeber zur simulierten Bewegung in einer virtuellen Umgebung**
Motion generator for motion simulation in a virtual environment
Générateur de mouvement pour simuler des mouvements dans un environnement virtuel

(30) Priorität: 01.12.1993 DE 4340941
(43) Veröffentlichungstag der Anmeldung: 07.06.1995
(73) Patentinhaber: STN ATLAS Elektronik GmbH, 28305 Bremen (DE)
(72) Erfinder: Hanekamp, Nikolaus, Dipl.-Ing., D-28209 Bremen (DE)

(56) Entgegenhaltungen:
- EP-A- 0 557 111
- GB-A- 2 175 729
- GB-A- 2 281 857
- US-A- 4 925 189
- US-A- 5 059 124
- US-A- 5 255 211
- PROCEEDINGS OF THE VIRTUAL REALITY ANNUAL INTERNATIONAL SYMPOSIUM, SEATTLE, SEPT. 18 - 22, 1993, Nr. SYMP. 1, 18.September 1993, INSTITUTE OF ELECTRICAL AND ELECTRONICS ENGINEERS, Seiten 209-215, XP000457690 HIDEKI HASHIMOTO ET AL: "DYNAMIC FORCE SIMULATOR FOR FORCE FEEDBACK HUMAN-MACHINE INTERACTION"

## Beschreibung

Die Erfindung betrifft einen Bewegungsgeber zur simulierten Bewegung einer vor einer von einem Sichtsystem generierten virtuellen Umgebung plazierten Person innerhalb der virtuellen Umgebung der im Oberbegriff des Anspruchs 1 genannten Gattung.

Solche Bewegungsgeber ermöglichen eine simulierte Bewegung, wie Laufen oder Gehen, innerhalb einer virtuellen Umwelt einer in realiter außerhalb dieser Umwelt sich befindlichen Person, wobei die vom Bewegungsgeber abgegebenen Steuersignale die Darstellung der virtuellen Umwelt auf einem Bildschirm oder einer Projektionsleinwand des Sichtsystems sehr schnell verschieben, drehen oder zoomen, um so für die die dargestellte Umwelt betrachtende Person eine deren verändertem Sichtwinkel entsprechende Perspektive der Bilddarstellung zu generieren.

Bei einem bekannten Bewegungsgeber der eingangs genannten Art (DE 36 11 337 A1) wird das Steuerglied des Bewegungsgebers, das hierzu von der vor dem Bildschirm oder der Leinwand, also vor der virtuellen Umwelt, plazierten Person zu bedienen ist, von einer Kunststoffkugel gebildet, in welcher eine optoelektronische Anordnung zum gleichzeitigen Eingeben von insgesamt sechs Komponenten untergebracht ist. Hierbei ist jeder von mindestens sechs lichtemittierenden Einrichtungen eine fest angeordnete Schlitzblende vorgeschaltet. Diese lichtemittierenden Einrichtungen sind gegenüber je einem mit seiner Detektorachse senkrecht zur Schlitzrichtung der jeweils zugeordneten Schlitzblende ausgerichteten, positionsempfindlichen Detektor so vorgesehen, daß die lichtemittierenden Einrichtungen mit den zugeordneten Schlitzblenden und die positionsempfindlichen Detektoren relativ zueinander bewegbar sind. Die jedem Detektor einzeln zugeordnete lichtemittierende Einrichtung wird jeweils mittels einer Regelelektronik angesteuert, welche die Summe der beiden in dem zugehörigen positionsempfindlichen Detektor fließenden Ströme konstant auf einem für alle sechs Systeme gleichen Wert hält und dazu die Strahlungsintensität der lichtemittierenden Einrichtung regelt. Die Detektoren sind auf der Innenseite eines Rings angeordnet, welcher seinerseits an der Innenseite der Kunststoffkugel fest angebracht ist. Die Kunststoffkugel muß zum Verändern der Blickrichtung in die virtuelle Umgebung von der Person von Hand entsprechend einer gewünschten Bewegung bedient werden.

Eine technische Weiterentwicklung dieses bekannten Bewegungsgebers ist unter dem Handelsnamen "Space Mouse" bekannt. Die Kunststoffkugel wird dabei durch eine Kappe ersetzt, die in einem Basisgehäuse aufgenommen ist. Die Hand des Bedienenden liegt auf der Kappe auf und durch leichten Fingerdruck lassen sich Auslenkungen der Kappe in x-, y-, z-Richtung erzeugen, die zu entsprechenden Steuersignalen zur Veränderung der virtuellen Umwelt führen.

Bei diesem bekannten Bewegungsgeber erfordert die simulierte Bewegung der vor der virtuellen Umgebung plazierten Person eine Bedienung des Steuergliedes mit der Hand. Dies macht zum einen ein gewisses Training zum Erlernen einer mit der beabsichtigten Bewegung synchronen Steuerung des Bewegungsgebers nötig und blockiert zum anderen eine Hand, die damit für andere Aufgaben, wie sie zusätzlich bei bestimmten Trainingssimulatoren für die Person anfallen, nicht mehr zur Verfügung steht.

Bei einem bekannten System zur Realzeitdarstellung von synthetischen Bildern einer Umgebung zwecks Interaktion mit einem Benutzer (US 5 255 211) wird mittels eines "Environment Modeling Modul" die Umwelt so dargestellt, wie sie der Nutzer mit seinen fünf Sinnen wahrnimmt. Ein "User Sensor Modul" detektiert drahtlos die Position und Bewegung des Nutzers innerhalb eines durch Boden, Wände und Decke umgrenzten Bewegungsraums vor der Umgebungsdarstellung und überträgt seine Informationen auf den "Environment Modeling Modul". Dort werden die Informationen benutzt, die Umgebungsdarstellung entsprechend der Position des Nutzers zu aktualisieren.

Bei einer Baumfrucht-Erntevorrichtung (US 3 384 201) ist eine einen Obstpflücker tragende Plattform über einen Scherenausleger an einem Hubkäfig befestigt, der seinerseits an einem um seine Achse drehbaren vertikalen Mast höhenverstellbar gehalten ist. Auf der Plattform ist ein den Pflücker im Brustbereich horizontal umschließender Ring vorhanden, der mit Steuermitteln so zusammenwirkt, daß ein Auslenken des Rings nach rechts, links, vorn oder hinten eine entsprechende Schwenkung der Plattform in der Horizontalebene auslöst, so daß der Pflücker die Plattform und sich innerhalb der Baumkrone wunschgenmäß positionieren kann. Ein zweiter Ring umschließt den Kniebereich des Pflückers. Wird der zweite Ring mittels des Knies nach unten ausgelenkt, so fährt der Hubkäfig mit Scherenausleger und Plattform nach unten, wird der zweite Ring nach oben ausgelenkt, so erfolgt umgekehrt eine Bewegung nach oben. Der Pflücker kann damit seine vertikale Position bestimmen.

Der Erfindung liegt die Aufgabe zugrunde, einen Bewegungsgeber der eingangs genannten Art derart auszugestalten, daß einerseits die manuelle Bedienung des Steuerglieds des Bewegungsgebers wegfällt und andererseits die zur simulierten Bewegung in der virtuellen Umwelt richtige Bedienung des Steuerglieds sich weitgehend intuitiv von selbst ergibt und nicht oder nur in geringem Umfang von dem Bedienenden erlernt werden muß.

Die Aufgabe ist bei einem Bewegungsgeber der im Oberbegriff des Anspruchs 1 definierten Gattung erfindungsgemäß durch die Merkmale im Kennzeichenteil des Anspruchs 1 gelöst.

Der erfindungsgemäße Bewegungsgeber hat den Vorteil, daß in Folge der Betätigung des Sensors durch die Körperverlagerung der vor der virtuellen Umwelt plazierten Person, wie sie dann auftritt, wenn sich die Person in realiter von ihrem Standort aus nach links, rechts, vor oder seitwärts in Bewegung setzt, die Steuerung der Blickrichtung in die virtuelle Umgebung intuitiv richtig vorgenommen wird. Die Steuerung erfolgt aus der quasinatürlichen Bewegung der Person heraus und muß nicht von dieser erst mühsam erlernt werden. Es genügt eine nur sehr kurze Eingewöhnungsphase, damit die Person sich richtig in der für sie sichtbaren virtuellen Umwelt wie gewünscht vor-, seit-, oder rückwärts bewegt. Zugleich bleiben beide Hände frei und können für andere Aufgaben genutzt werden. Z. B. kann bei einem sog. Feuerwehrsimulator zum Training des Löscheinsatzes eines Feuerlöschzuges der Zugführer in voller Ausrüstung, d.h. Löschanzug, Helm, feuerhemmende Handschuhe etc., ein Sprechgerät bedienen, um seinen Feuerwehrleuten vor Ort die notwendigen Anweisungen zu erteilen. Mit Schutzhandschuhen könnte der eingangs beschriebene bekannte Bewegungsgeber z. B. nicht bedient werden.

Der der Körperverlagerung der Person ausgesetzte Sensor erzeugt entsprechend dieser Körperverlagerung einen Verschiebeweg oder eine Verschiebekraft, die von dem zweidimensionalen Weg- oder Kraftaufnehmer in entsprechende Steuersignale umgesetzt wird. Die Steuersignale werden auf das Sichtsystem übertragen, das damit ein dem neuen virtuellen Augenpunkt der Person entsprechendes Umgebungsbild generiert und zur Darstellung bringt. So kann sich die vor der virtuellen Umwelt befindliche Person sehr einfach in dieser virtuellen Umwelt simultan bewegen, wobei entsprechend ihrer quasinatürlichen Bewegung das Umweltbild mehr oder weniger schnell verschoben, gedreht oder gezoomt wird.

Zweckmäßige Ausführungsformen des erfindungsgemäßen Bewegungsgebers mit vorteilhaften Weiterbildungen und Ausgestaltungen der Erfindung ergeben sich aus den weiteren Ansprüchen.

Gemäß einer bevorzugten Ausführungsform der Erfindung wird der Sensor durch einen steifen Ring realisiert, der den Körper oder die Beine, vorzugsweise in deren Oberschenkelbereich, der vor dem Bildschirm oder der Leinwand des Sichtsystems stehenden Person mit Radialabstand etwa horizontal umschließt. Der Ring wird mittels als Federn oder gummielastische Puffer ausgebildeten Rückstellmitteln in einer Grundstellung gehalten und ist in der Horizontalebene gegen die Kraft dieser Rückstellmittel von der Person radial auslenkbar angeordnet. Durch diesen Ring wird ein konstruktiv sehr einfacher Sensor verwirklicht, wobei durch seine Belastung durch die Oberschenkel der Person bei Einleitung einer Bewegungsphase eine sehr intuitive und mit der natürlichen Bewegung der Person sehr weitgehend konforme Steuerung gewährleistet ist. Außerdem läßt sich durch die Rückstellkraft der Rückstellmittel ein sehr direktes taktiles Feedback der Bewegungsgeschwindigkeit und Bewegungsrichtung erzielen.

Gemäß einer vorteilhaften Ausführungsform der Erfindung ist der Ring über die Federn an einem Gestell in horizontaler Ausrichtung aufgehängt und in zwei Ringabschnitte unterteilt, die miteinander an der einen Stoßstelle gelenkig verbunden und an der anderen Stoßstelle lösbar verriegelbar sind. Diese konstruktive Gestaltung stellt ein komfortables Eintreten der Person in den Bewegungsgeber sicher. Die Ringform ist der Körperform der Person angepaßt und kann Kreis- oder Ellipsenform aufweisen.

Die Erfindung ist anhand eines in der Zeichnung dargestellten Ausführungsbeispiels im folgenden näher beschrieben. Es zeigen in jeweils schematischer Darstellung:
- Fig. 1: einen Trainingsraum eines Feuerlöschsimulators, perspektivisch skizziert,
- Fig. 2: eine vergrößerte perspektivische Darstellung eines Bewegungsgebers des Feuerwehrsimulators in Fig. 1,
- Fig. 3: eine Draufsicht auf den Bewegungsgeber in Fig. 1.

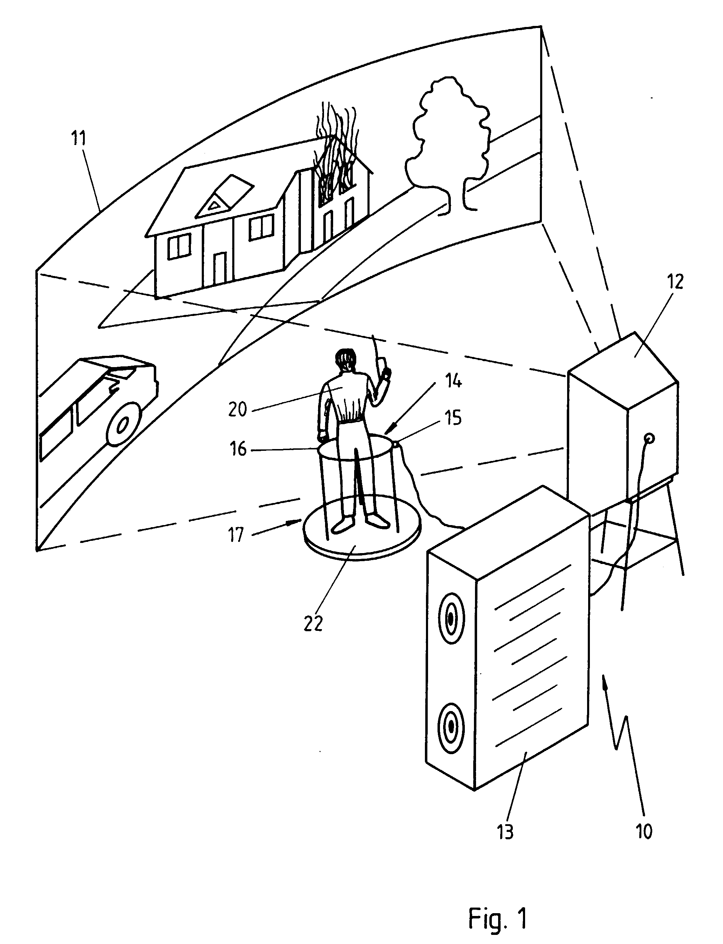

Ein Feuerwehrsimulator, von dem der Zugführer-Trainingsraum in Fig. 1 schematisch und perspektivisch skizziert ist, dient zum taktischen Training des Zugführers einer Feuerwehrlöschmannschaft oder Feuerwehrbrigade bei der Brandbekämpfung. Der Zugführer kann damit in einer virtuellen Umwelt, die ein realistisches Szenario widerspiegelt, den Einsatz der Löschfahrzeuge, der Feuerwehrleute vor Ort, taktische Methoden zur Feuerbekämpfung etc. trainieren und den Erfolg oder Mißerfolg seiner Anweisungen und Einsatzbefehle beobachten.

Der Simulator weist hierzu ein Sichtsystem 10 auf, das auf einem Bildschirm 11 ein gewünschtes Trainingsszenario darstellt. Im beschriebenen Ausführungsbeispiel wird eine virtuelle Umgebung oder Umwelt von einem Bildprojektor 12 auf den als großflächigen Projektionsschirm ausgebildeten Bildschirm 12 projiziert. Das zu projizierende Bild wird in einem Bildgenerator digital erzeugt und zur Projektion auf den Bildprojektor 12 übertragen. Der Bildgenerator und sonstige Steuer- und Regeleinheiten sind in dem mit 13 bezeichneten Elektronikkabinett untergebracht.

Die zur trainierende Person, also der Zugführer der Feuerwehrbrigade, im folgenden Trainingsperson 20 genannt, wird vor dem Bildschirm 11 plaziert. Um das Training möglichst wirklichkeitsnah zu gestalten, trägt die Trainingsperson 20 die übliche vollständige Einsatzkleidung, also Helm, Schutzweste, feuerhemmende Handschuhe etc., und benutzt als Zugführer der Feuerwehrbrigade ein Sprechfunkgerät, um Einsatzbefehle an die einzelnen Bekämpfungsgruppen durchzugeben, die ebenfalls in der virtuellen Umgebung dargestellt werden. Die Trainingsperson 20 hat nun die Möglichkeit, sich innerhalb der auf dem Bildschirm 11 dargestellten virtuellen Umwelt oder Umgebung zu bewegen, also z.B. näher an den Brandherd heranzugehen, den Brandherd zu umkreisen, in den Brandherd selbst einzudringen etc. Hierzu ist ein Bewegungsgeber mit einem von der Trainingsperson 20 zu betätigenden Steuerglied vorgesehen, der den gewünschten Bewegungen der Trainingsperson 20 entsprechende Steuersignale generiert und an das digitale Sichtsystem 10 gibt. Entsprechend den Steuersignalen generiert das digitale Sichtsystem 10 ein verändertes Bild der virtuellen Umgebung, das dem durch die Bewegung der Trainingsperson 20 geänderten Sichtwinkel, dem sog. Augenpunkt, der Trainingsperson 20 entspricht. Will also die Trainingsperson 20 simultan näher an den Brandherd herangehen, so wird das Bild der virtuellen Umwelt gezoomt, also vergrößert dargestellt. Bewegt sich die Trainingsperson 20 seitwärts, so wird das Bild entsprechend gedreht. In allen Bewegungsphasen erscheint der Trainingsperson 20 das Bild der virtuellen Umwelt so, als ob sie sich selbst in dieser Umwelt bewegen würde.

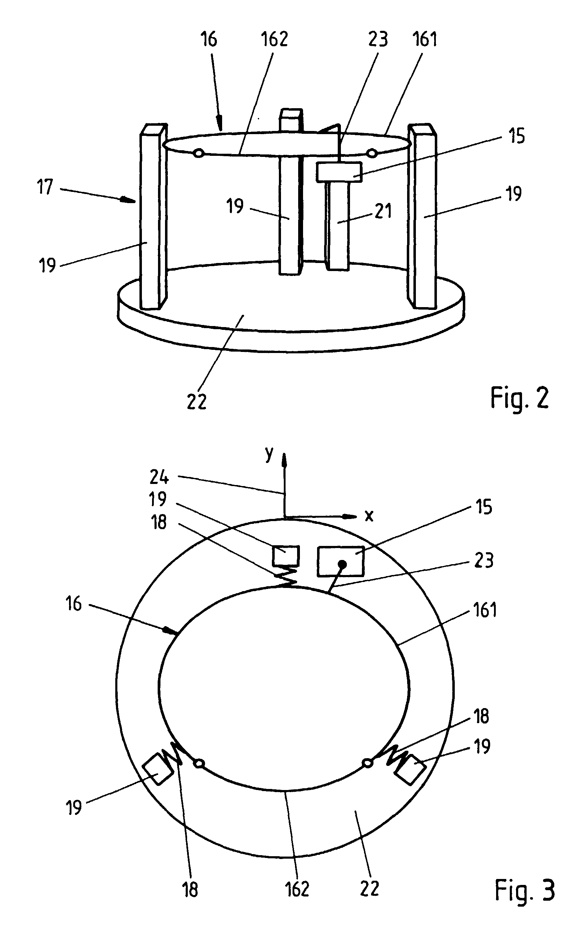

Um den Lernprozeß zur richtigen Bedienung des Steuerglieds des Bewegungsgebers entsprechend der gewünschten Bewegung auf ein Zeitminimum zu reduzieren, weist das Steuerglied einen der Körperverlagerung der Trainingsperson 20 ausgesetzten Sensor 14 und einen an diesen angekoppelten zweidimensionalen Weg- oder Kraftaufnehmer 15 auf, der die von dem Sensor 14 registrierte Körperverlagerung der Trainingsperson 20 abhängig von der Größe und der Richtung der Körperverlagerung in Ausgangssignale umsetzt, die die angesprochenen Steuersignale für das digitale Sichtsystem 10 bilden. Der Sensor 14 ist dabei so ausgestaltet, daß er die Körperverlagerung der stehenden Trainingsperson 20 erfaßt, die sich von selbst ergibt, wenn die Trainingsperson 20 von ihrem Standort aus sich nach rechts oder links vorwärts oder rückwärts in Bewegung setzt. Die Trainingsperson 20 kann sich also wie in Wirklichkeit bewegen, um ihre simulierte Bewegung in der virtuellen Umwelt richtig zu steuern. Hierzu ist der Sensor 14 als steifer Ring 16 von etwa kreisrunder oder elliptischer Form ausgebildet, der den Oberschenkelbereich der Trainingsperson 20 mit radialem Abstand umschließt. Der Ring 16 ist in einem Gestell 17 so aufgehängt, daß er von der Trainingsperson 20 aus einer Grundstellung heraus in alle Richtungen in der horizontalen Ebene gegen die Rückstellkraft von Rückstellelementen verschoben werden kann. Wie Fig. 3 deutlicher zeigt, ist der Ring 16 über drei am Ringumfang um gleiche Umfangswinkel gegeneinander versetzt angeordnete Druckfedern 18 an drei Beinen 19 des Gestells 17 abgestützt. Die drei Beine 19 sind zusammen mit einem Sockel 21 auf einer Bodenplatte 22 befestigt. Alternativ kann der Ring 16 auch in Höhe des Beckens der Trainingsperson 20 angeordnet werden. Auf dem Sockel 21 ist der Weg- oder Kraftaufnehmer 15 befestigt, der über einen Ausleger 23 starr am Ring 16 befestigt ist.

Zweidimensionale Weg- oder Kraftaufnehmer sind hinlänglich bekannt. Sie arbeiten auf verschiedene, vielfältige Weise mit elektrischen Schiebepotentiometer, Piezzoelementen, Dehnungsmeßstreifen etc. Ein Wegaufnehmer setzt dabei den Verschiebeweg am Ausleger 23 getrennt in zwei orthogonalen Achsen in elektrische Signale um, während ein Kraftaufnehmer die auf den Ausleger 23 wirkende Kraft getrennt in zwei orthogonalen Achsen erfaßt und in entsprechende elektrische Signale umsetzt.

Bewegt sich die innerhalb des Rings 16 stehende Trainingsperson 20 ausschließlich nach vorn, also in Richtung der y-Achse des in Fig. 3 dargestellten orthogonalen Koordinatensystems 24, so wird sie den Ring 16 bei der Vorwärtsbewegung in Richtung der y-Achse gegen die Rückstellkraft der Druckfedern 18 verschieben. Die hierzu von der Trainingsperson 20 aufgebrachte Kraft wird von dem Kraftmesser 15 zweiachsig entsprechend dem Koordinatensystem 24 sensiert und in entsprechende Steuersignale umgesetzt. Das x-Steuersignal ist dabei etwa Null. Das y-Steuersignal bewirkt, daß das auf dem Bildschirm 11 dargestellte Umweltbild gezoomt wird, also sich stetig vergrößert, und zwar so lange wie die Trainingsperson 20 den Ring 16 in Vorwärtsrichtung belastet. Die Änderungsgeschwindigkeit des Bilds ist dabei von der Größe der Kraft abhängig. Die nach wie vor auf der Bodenplatte 22 stehende Trainingsperson 20 hat somit den Eindruck, daß sie sich in die virtuelle Umwelt hineinbewegt und sich beispielsweise dem Brandherd nähert. Bewegt sich die Trainingsperson 20 hingegen nach rückwärts, so wird der Ring 16 in Gegenrichtung belastet. Die entsprechend generierten Steuersignale bewirken, daß das digitale Sichtsystem 10 eine Bildänderung generiert, durch die die virtuelle Umwelt auf dem Bildschirm 11 in zunehmender Entfernung von der Trainingsperson 20 dargestellt wird. Bewegt sich die Trainingsperson 20 seitwärts, so wird der Ring 16 links oder rechts belastet, was zu einer Drehung der Bilddarstellung auf dem Bildschirm 11 in die eine oder andere Richtung führt.

Zum komfortablen Ein- und Ausstieg in den Ring 16 ist der steife Ring 16 in zwei steife Ringabschnitte 161 und 162 unterteilt, wobei der Ringabschnitt 161, wie vorstehend beschrieben, mit dem Gestell 17 verbunden bleibt. Der zweite Ringabschnitt 162 ist an seinen Stoßstellen mit dem ersten Ringabschnitt 161 einerseits schwenkbar verbunden und andererseits lösbar verriegelbar. Nach Lösen der Verriegelung kann der Ringabschnitt 162 geschwenkt werden, und die Trainingsperson 20 kann in den Ring 16 eintreten oder diesen verlassen. Danach wird der Ring 16 durch Schließen des Ringabschnitts 162 und Verriegelung wieder komplettiert.

## Patentansprüche

1. Bewegungsgeber zur simulierten Bewegung einer vor einer von einem Sichtsystem (10) generierten virtuellen Umgebung plazierten Person (20) innerhalb der virtuellen Umgebung, mit einem von der Person (20) zu betätigenden Steuerglied, das Steuersignale entsprechend der gewünschten Bewegung an das Sichtsystem (10) gibt, das danach ein dem Augenpunkt der simuliert sich bewegenden Person (20) entsprechendes Sichtbild der virtuellen Umgebung generiert, dadurch gekennzeichnet, daß das Steuerglied einen Sensor (14), der der Körperverlagerung der vor-, seit-, oder rückwärts sich in Bewegungsetzen wollenden, ortsunveränderlich vor dem Sichtsystem (10) plazierten Person (20) mechanisch ausgesetzt ist, und einen an diesem angekoppelten zweidimensionalen Weg- oder Kraftaufnehmer (15) aufweist, dessen Ausgangssignale die Steuersignale bilden.

2. Bewegungsgeber nach Anspruch 1, dadurch gekennzeichnet, daß der Sensor (14) von einem den Körper oder die Beine, vorzugsweise im Oberschenkelbereich, der Person (20) mit Radialabstand etwa horizontal umschließenden Ring (16) gebildet ist, der mittels Rückstellmittel (18) in einer Grundstellung gehalten und in der Horizontalebene gegen die Kraft der Rückstellmittel (18) radial auslenkbar angeordnet ist.

3. Bewegungsgeber nach Anspruch 2, dadurch gekennzeichnet, daß die Rückstellmittel von Federn (18) oder gummielastischen Puffern gebildet sind, die um gleiche Umfangswinkel versetzt außen am Ring (16) radial angreifen.

4. Bewegungsgeber nach Anspruch 3, dadurch gekennzeichnet, daß der Ring (16) über die Federn (18) oder die gummielastischen Puffer an einem Gestell (17) angebunden ist.

5. Bewegungsgeber nach einem der Ansprüche 2 bis 4, dadurch gekennzeichnet, daß der Ring (16) Kreis- oder Ellipsenform aufweist.

6. Bewegungsgeber nach einem der Ansprüche 2 bis 5, dadurch gekennzeicnet, daß der Ring (16) in zwei Ringabschnitte (161, 162) unterteilt ist, die miteinander an ihrer einen Stoßstelle gelenkig verbunden und an ihrer anderen Stoßstelle lösbar verriegelt sind.

## Claims

1. Motion generator for simulated motion, within a virtual environment, of a person (20) positioned in front of that virtual environment which is generated by a visual system (10), with a control element to be operated by the person (20) which outputs control signals according to the desired motion to the visual system (10) which then generates a visual image of the virtual environment according to the eye point of the person (20) whose motion is being simulated, characterised in that the control element has a sensor (14) which is mechanically subjected to the body displacement of the person (20) who is positioned at a fixed place in front of the visual system (10) and who wishes to begin moving forwards, sideways or backwards, and a two-dimensional detector of displacement or force (15) which is coupled to that sensor and whose output signals form the control signals.

2. Motion generator according to Claim 1 characterised in that the sensor (14) consists of a ring (16) which surrounds approximately horizontally the body or legs, preferably in the thigh region, of the person (20) at a radial distance and which is kept in a neutral position by means of restoring devices (18) and is arranged so as to be radially deflectable in the horizontal plane against the force of the restoring devices (18).

3. Motion generator according to Claim 2, characterised in that the restoring devices consist of springs (18) or rubber-elastic buffers which, offset by equal angles at the circumference, act externally on the ring (16) in the radial direction.

4. Motion generator according to Claim 3, characterised in that the ring (16) is attached to a frame structure (17) via the springs (18) or the rubber-elastic buffers.

5. Motion generator according to one of the Claims 2 to 4, characterised in that the ring (16) has a circular or elliptical shape.

6. Motion generator according to one of the Claims 2 to 5, characterised in that the ring (16) is divided into two ring-sections (161, 162) which are hinged to one another at one of their joints and releasably locked at their other joint.

## Revendications

1. Capteur de déplacement destiné à déplacer de façon simulée, dans un environnement virtuel généré par un système de visualisation (10), une personne (20) située devant cet environnement, comprenant un élément de commande à actionner par la personne (20) et transmettant des signaux de commande en fonction du mouvement souhaité vers le système de visualisation (10) qui génère alors une image de l'environnement virtuel correspondant au centre de perspective de la personne (20) se déplaçant de façon simulée, caractérisé en ce que l'élément de commande dispose d'un détecteur (14) soumis mécaniquement au déplacement du corps de la personne (20) qui est placée de manière stationnaire devant le système de visualisation (10) et souhaite se déplacer en avant, de côté ou en arrière, et d'un transducteur bidimensionnel de position ou de force (15) accouplé à ce détecteur et dont les signaux de sortie constituent les signaux de commande.

2. Capteur de déplacement suivant revendication 1, caractérisé en ce que le détecteur (14) est constitué d'un anneau (16) entourant dans un plan approximativement horizontal et à une distance radiale le corps ou les jambes de la personne (20), de préférence dans la zone des cuisses, maintenu dans une position de base par des moyens de rappel (18) et disposé dans le plan horizontal de façon à pouvoir être dévié radialement contre la force des moyens de rappel (18).

3. Capteur de déplacement suivant revendication 2, caractérisé en ce que les moyens de rappel sont constitués de ressorts (18) ou d'amortisseurs élastiques qui, décalés par des angles périphériques identiques, sont appliqués radialement sur l'extérieur de l'anneau (16).

4. Capteur de déplacement suivant revendication 3, caractérisé en ce que l'anneau (16) est lié à un bâti (17) au moyen des ressorts (18) ou des amortisseurs élastiques.

5. Capteur de déplacement suivant l'une des revendications 2 à 4, caractérisé en ce que l'anneau (16) a une forme circulaire ou élliptique.

6. Capteur de déplacement suivant l'une des revendications 2 à 5, caractérisé en ce que l'anneau (16) est divisé en deux sections d'anneau (161, 162) qui sont attachées l'une à l'autre par une articulation à l'un de leurs joints et par un verrouillage détachable à l'autre joint.
